# FASCICULE DE BREVET EUROPEEN

(11) **EP 0 620 946 B1**
(45) Date de publication et mention de la délivrance du brevet: **11.09.1996**
(21) Numéro de dépôt: 93924670.8
(22) Date de dépôt: 03.11.1993
(51) Int. Cl.: G21C 17/00, G21C 13/06, G21C 13/036

(54) **Procédé et dispositif de détection de fuites de traversées de couverele de cuve de réeacteur nucléaire en fonctionnement**
Verfahren und Einrichtung zum Auffinden von Lecks der Durchführungen im Behälterdeckel eines in Betrieb befindlichen Kernreaktors
Method and device for detecting leaks through the bushings of the cover of the vessel of an operating nuclear reactor

(30) Priorité: 06.11.1992 FR 9213417
(43) Date de publication de la demande: 26.10.1994
(73) Titulaire: ELECTRICITE DE FRANCE Service National, F-75008 Paris (FR)
(72) Inventeur: LOISY, François, F-92500 Rueil-Malmaison (FR); GERMAIN, Jean-Luc, F-78400 Chatou (FR)
(74) Mandataire: Moncheny, Michel
(86) Numéro de dépôt international: FR9301084
(87) Numéro de publication internationale: WO9411882

(56) Documents cités:
- DE-B- 1 063 292
- FR-A- 1 493 249
- FR-A- 2 402 201
- GB-A- 828 468
- US-A- 3 087 327
- US-A- 5 027 507

## Description

### Procédé et dispositif de détection de fuites de traversées de couvercle de cuve de réacteur nucléaire en fonctionnement.

L'invention concerne la détection et l'évaluation de l'importance des fuites situées sur le couvercle d'une cuve de réacteur nucléaire rempli d'eau sous pression à température élevée.

La détection et l'évaluation des fuites s'effectuent à l'aide d'un gaz traceur : la vapeur d'eau elle-même, issue de la fuite recherchée.

Une application particulièrement importante de l'invention est constituée par la détection de fuites de traversées de couvercles de cuves de réacteurs nucléaires à eau pressurisée. Les traversées dont il s'agit sont celles qui permettent le passage des tiges de commande des grappes de contrôle. La détection précoce de telles fuites permet à l'exploitant de conduire l'installation vers un état de fonctionnement de repli sûr.

On connaît déjà des techniques de détection de fuites de traversées de couvercles de cuves dérivées de celles utilisées pour la détection de fuites d'échangeurs de chaleur. Beaucoup de solutions utilisent le contrôle par dilution d'un traceur radioactif. Dans certains dispositifs, cette solution utilisant le contrôle de la radioactivité particulaire, conduit à des seuils de détection et à des temps d'intégration élevés du fait de la grande dilution du traceur. D'autres solutions connues ne permettent pas de donner directement d'indication sur l'importance de la fuite et ont l'inconvénient d'être essentiellement qualitatives.

L'invention vise à fournir un procédé et un dispositif de détection de fuites de traversées de couvercle de cuve de réacteur nucléaire à eau qui permettent de déceler rapidement l'apparition d'une fuite et de suivre son évolution en ne mettant en oeuvre que des moyens simples et des éléments adaptables à des réacteurs de puissances différentes.

L'invention a pour objet un dispositif de détection de fuites de traversées de couvercle de cuve de centrale nucléaire, caractérisé par ce qu'il comprend un circuit de prélèvement de l'air circulant dans le volume d'une chambre où débouchent les fuites potentielles avant que cet air soit dilué dans le circuit de refroidissement des mécanismes de commande des grappes de contrôle du réacteur.

La grande sensibilité du procédé proposé tient en ce que le prélèvement s'effectue à l'intérieur du volume de la chambre où débouche la fuite. Grâce à ce prélèvement, la mesure de la teneur en gaz traceur est faite avant que ce gaz traceur soit dilué de façon importante dans le fort débit d'air servant à refroidir les mécanismes de commande des grappes de contrôle.

Pour la mise en oeuvre de ce procédé, on fait appel à un dispositif qui est commandé à distance par un calculateur de type industriel. Le calculateur gère les différentes séquences de fonctionnement de ce dispositif, traite les mesures de différents capteurs et fournit un diagnostic sur l'état de fonctionnement du dispositif, sur l'existence d'une fuite et son importance.

L'invention propose aussi des techniques inédites permettant, d'une part, de simuler des fuites pour estimer le débit de balayage d'air traversant le volume de la chambre où débouchent les fuites potentielles et, ainsi, d'évaluer et suivre l'évolution de l'éventuel débit de fuite et, d'autre part, de contrôler le bon fonctionnement des circuits de prélèvement et de détection de fuites.

L'invention sera mieux comprise à la lecture de la description et des revendications qui suivent de modes particuliers d'exécution, donnés seulement à titre d'exemples non limitatifs ainsi que de l'examen du dessin, où :
- la Figure 1 est une illustration schématique d'un mode de réalisation d'un dispositif suivant l'invention destiné à prélever des échantillons d'air dans et hors du volume de la chambre où débouchent les fuites potentielles à détecter,
- la Figure 2 représente une vue de dessus de la Figure 1;
- la Figure 3 est une vue analogue à celle de la Figure 2 d'une variante de réalisation de l'invention;
- la Figure 4 est une vue analogue à celle de la Figure 1 d'une variante de réalisation de l'invention;
- la Figure 5 est un schéma fonctionnel de l'ensemble de mesure et d'une unité de traitement et de pilotage qui lui est reliée;
- la Figure 6 est une vue similaire à celle de la Figure 1 illustrant un simulateur de fuite et sa mise en oeuvre suivant l'invention; et
- la Figure 7 est une vue similaire à celle de la Figure 6 illustrant une variante de réalisation d'un simulateur de fuite et sa mise en oeuvre selon l'invention.

L'agencement des installations nucléaires et celui de leur circuit de ventilation et/ou refroidissement en particulier, étant bien connus dans la technique, on ne décrira par la suite que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants de l'invention avant d'en exposer la mise en oeuvre.

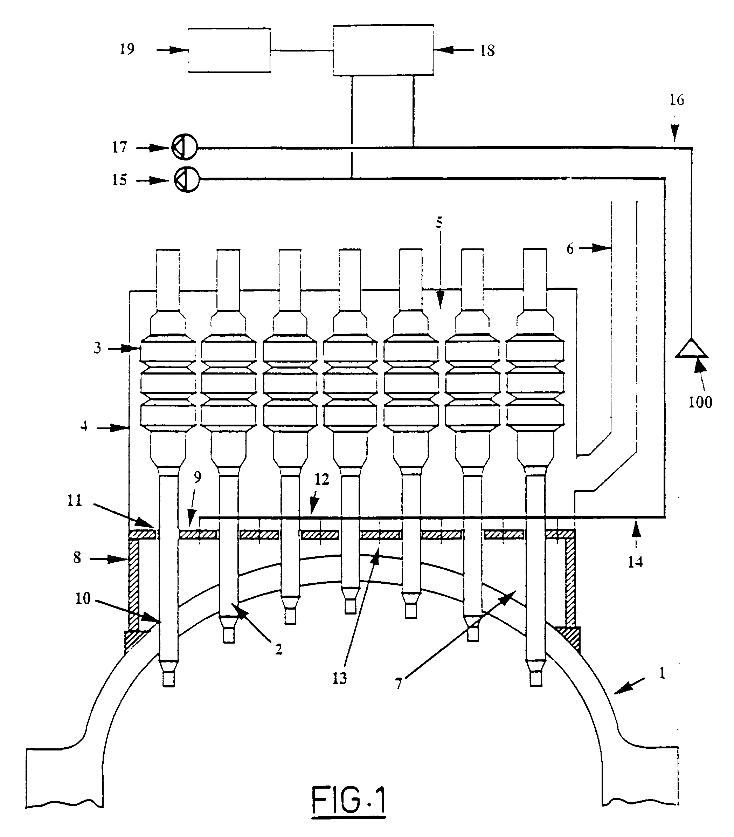

La Figure 1 illustre l'environnement, c'est-à-dire ce qui se trouve à proximité, du couvercle de cuve d'un réacteur à eau sous pression et qui est nécessaire à l'invention.

Un couvercle 1 de cuve est muni de traversées 2 qui permettent le passage de tiges de grappes de contrôle, non dessinées, commandées par des mécanismes 3. Un circuit de ventilation assure le refroidissement des mécanismes 3. Ce circuit est constitué d'une enveloppe 4 entourant les mécanismes de commande 3. De l'air ambiant qui est aspiré au-dessus de l'enveloppe 4 à la partie supérieure 5 de celle-ci, redescend dans le volume de l'enveloppe 4 le long des mécanismes de commande 3 pour être aspiré dans des gaines 6 dont une seule est dessinée. Une chambre 7, appelée habituellement "intérieur du casing" est délimitée par le couvercle de cuve 1 et des plaques 8 et 9 de calorifugeage. Cette chambre 7 confine les interfaces ou jonctions 10 entre les traversées 2 et la paroi supérieure du couvercle 1 de cuve; c'est à ces interfaces ou jonctions que débouchent ou se manifestent les éventuelles fuites que l'invention vise à détecter.

En fonctionnement normal, le circuit de ventilation des mécanismes de commande 3 des grappes, aspire l'air dans la chambre 7 au travers des jeux 11 qui existent entre les plaques 8, 9 et les traversées 2. Ces jeux 11 sont disparates et les débits locaux de circulation d'air autour des traversées 2 ne sont pas homogènes.

La fonction du circuit de prélèvement selon l'invention est d'aspirer un échantillon d'air contenu dans le volume de la chambre 7, échantillon qui est chargé en vapeur d'eau libérée par la fuite.

Une des difficultés soulevées par la technique de prélèvement réside dans le fait que l'échantillon d'air doit être prélevé avant que la vapeur d'eau soit diluée dans le fort débit d'air de ventilation qui circule dans l'enveloppe 4 puis dans les gaines 6.

Cette difficulté est résolue par une disposition particulière du prélèvement qui consiste à aspirer de façon continue l'air à analyser à l'intérieur du volume de la chambre 7. Cette aspiration est assurée à l'aide de rampes 12 munies de tubes 13 qui débouchent dans la chambre 7. Toutes les rampes 12 sont regroupées sur un collecteur commun 14. Une pompe 15 assure l'échantillonnage de l'air capté dans la volume de la chambre 7.

Une autre tuyauterie 16 raccordée à une autre pompe 17 prélève, de même, un échantillon d'air dans l'enceinte 100 du bâtiment du réacteur.

Un ensemble de mesure 18 est raccordé en dérivation sur les collecteur et tuyauterie 14 et 16 respectivement, pour mesurer la différence de concentration du traceur dans les deux échantillons circulant dans ces deux collecteur et tuyauterie 14 et 16.

La détection d'une fuite a lieu lorsque la différence de concentration entre ces deux échantillons est supérieure aux incertitudes de mesure normales de l'ensemble de mesure. Cet ensemble de mesure comprend des perfectionnements visant à limiter ou déceler des mauvais fonctionnements des détecteurs de traceur en vue d'éviter de fausses alarmes.

Cet ensemble de mesure 18 est relié à une unité de traitement et de pilotage 19 comprenant un calculateur de préférence industriel convenable approprié et permettant le contrôle et la commande des transmetteurs et actionneurs nécessaires aux mesures et à leur interprétation. Cette unité est avantageusement logée hors de l'enceinte du bâtiment du réacteur.

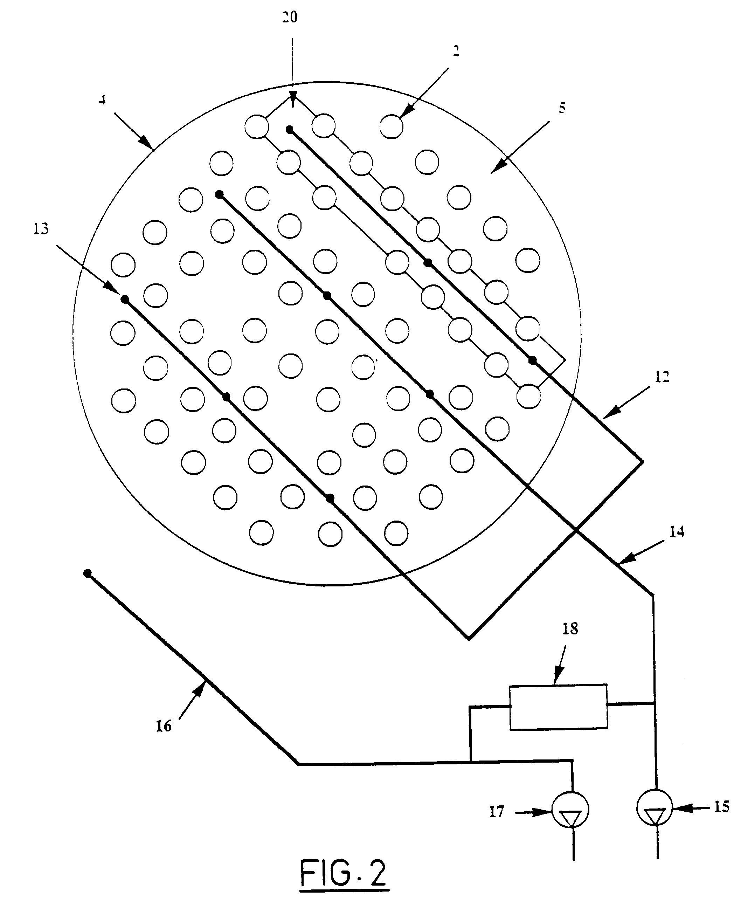

La Figure 2 illustre une vue de dessus de la Figure 1. On y retrouve les rampes d'aspiration 12 permettant le prélèvement de l'air de la chambre 7. Ces rampes sont reliées au collecteur commun 14. La pompe 15 permet l'acheminement du gaz contenu dans le collecteur 14. Les rampes 12 cheminent avantageusement au-dessus de bandes 20 qui constituent les plaques 9 supérieures de calorifugeage sur lesquelles elles sont fixées. Des tubes 13, en nombre réduit, qui traversent juste le calorifuge, sont raccordés aux rampes 12 et permettent le prélèvement de l'air dans la chambre 7. Une disposition judicieuse de ces tubes 13 de prélèvement, permet de couvrir de façon homogène l'ensemble de la zone de détection. Cette configuration du circuit de prélèvement a pour avantages essentiels sa simplicité, sa mise en place aisée du fait de la solidarité des rampes 12 et des bandes 20 et le nombre limité de points de prélèvement.

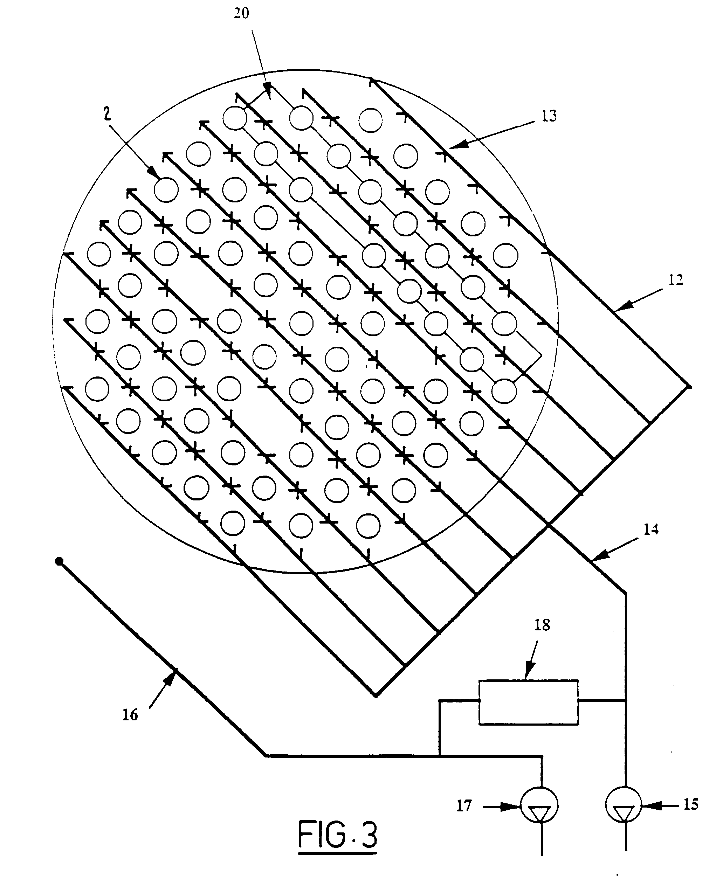

La Figure 3 illustre une vue de dessus d'une variante du circuit de prélèvement de l'air dans la chambre 7. Son avantage essentiel, par rapport à celui décrit auparavant, est que chaque traversée 2 est entourée de quatre tubes de prélèvement 13 disposés pratiquement en carré, rendant ainsi la détection des fuites plus aisée du fait de la surveillance individuelle de chaque traversée 2. Les tubes de prélèvement 13 sont raccordés aux rampes 12, solidaires des bandes 20 de calorifugeage, et sont reliées entre elles par le collecteur commun 14 de façon analogue à ce qui est exposé précédemment. Les sections des rampes 12 et des tubes 13 sont telles que les débits d'aspiration sont équilibrés pour toutes les traversées 2. On obtient ainsi une sensibilité identique pour la détection des fuites, quelle que soit la position de la traversée 2 défectueuse.

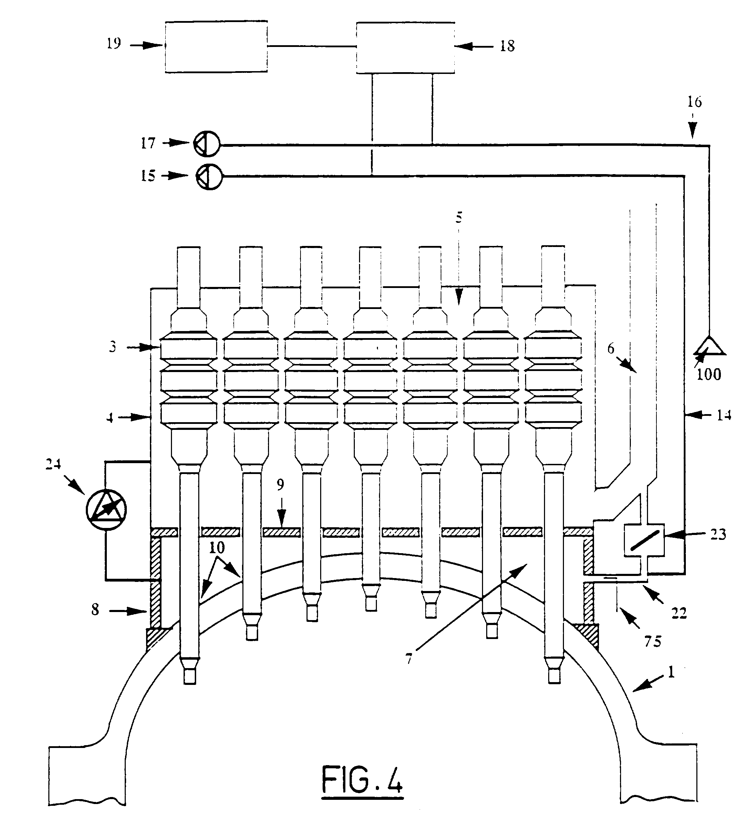

La Figure 4 illustre une autre variante du circuit de prélèvement de l'air dans la chambre 7. Une des difficultés techniques soulevées par le prélèvement est que ce prélèvement doit être homogène dans toute la chambre 7 pour que la sensibilité de la technique de détection des fuites ne dépende pas notablement de la position de la traversée 2 défectueuse. Cette difficulté est résolue par une disposition particulière du circuit de prélèvement qui consiste à installer en dérivation, ou en "by-pass", comme illustré, au moins une manchette 22 entre une gaine 6 d'aspiration du circuit de ventilation des mécanismes de commande 3 des grappes et la chambre 7. Par un effet de "trompe à vide", un débit d'aspiration se crée dans la manchette 22 qui met la chambre 7 en dépression. Ce débit et cette dépression sont réglés à l'aide d'un registre 23 et d'un capteur de pression différentielle 24 afin que la chambre 7 soit tout juste en dépression par rapport à l'enveloppe 4. La circulation d'air s'inverse alors entre l'enveloppe 4 et la chambre 7 et tout l'air de balayage de la chambre 7 est repris par la manchette 22. En cas de fuite, cet air de balayage recueille tout le traceur libéré, indépendamment de la position de la traversée 2 défectueuse. L'air de balayage passe dans la manchette 22 où le collecteur de prélèvement 14 aspire un échantillon grâce à la pompe 15. La tuyauterie 16, raccordée à la pompe 17 prélève de même un échantillon de l'air ambiant de l'enceinte de confinement 100. L'ensemble de mesure 18 est raccordé, comme indiqué auparavant en dérivation sur les deux collecteur et tuyauterie 14 et 16, pour mesurer la différence de concentration du traceur dans les deux échantillons circulant dans ces collecteur et tuyauterie 14 et 16. Le capteur 75 tel que par exemple un anémomètre à fil chaud ou un tube de Pitot, permet de déterminer le débit dans la manchette 22. La mesure de ce débit, associée aux mesures d'humidité décrites par la suite, permet une estimation de l'éventuel débit de la fuite détectée.

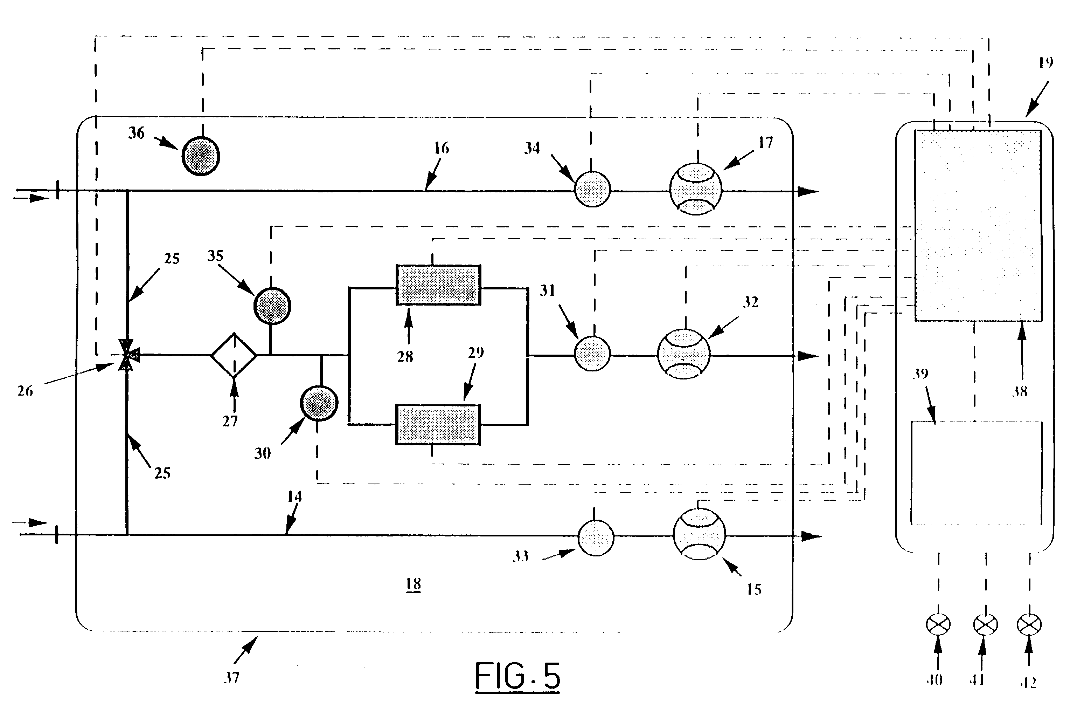

La Figure 5 illustre les branchements et raccordements fonctionnels de l'ensemble de mesure 18. Deux conduits de dérivation 25 sont connectés aux collecteur et tuyauterie de prélèvement 14 et 16, et à une électrovanne 26 trois voies dont la fonction est d'envoyer alternativement un échantillon d'air circulant dans les collecteur et tuyauterie 14 et 16 vers un filtre 27. Ce filtre a pour fonction d'éliminer les poussières et les vapeurs, autres que la vapeur d'eau, pour empêcher de souiller deux détecteurs d'humidité 28 et 29 ou hygromètres, reliés au filtre 27 et raccordés en parallèle. Un capteur de pression absolue 30 permet la correction de pression partielle de vapeur d'eau dans chaque échantillon venant alternativement du collecteur et de la tuyauterie 14 et 16, pour le cas où des différences de pression existeraient entre ces collecteur et tuyauterie 14 et 16.

Le débit de circulation global dans les détecteurs d'humidité 28 et 29, est mesuré à l'aide d'un débitmètre 31. Une pompe 32 assure la dépression nécessaire à la circulation de l'air dans l'ensemble de mesure 18. Le débit de circulation dans chacun des collecteur et tuyauterie de prélèvement 14 et 16, est assuré par les pompes 15 et 17, et est mesuré par des débitmètres 33 et 34. Un capteur de température 35 mesure la température de l'échantillon à analyser et permet de s'assurer que les détecteurs sont utilisés dans leur domaine de mesure. Un capteur de température 36 mesure la température ambiante d'une armoire 37 où est placé l'ensemble de mesure 18. Cette armoire 37 est thermostatée et munie de raccords démontables appropriés classiques de liaison au circuit de prélèvement.

L'électrovanne 26, la sortie mesure des détecteurs d'humidité 28, 29, du capteur de pression 30, des débitmètres 31, 33, 34, des capteurs de température 35, 36 sont reliées à un système de mesure et de commande 38 associé à un calculateur 39 qui, ensemble, constituent l'unité de traitement et de pilotage 19. Cette unité 19 assure les fonctions de commande, de mesure, d'interprétation des mesures et de commande des alarmes. Les raccordements avec l'ensemble de mesure 18 sont schématisés en trait discontinu.

Les incertitudes de mesure de la différence de concentration du traceur sont fortement diminuées grâce au "basculement" alternatif des échantillons sur les mêmes détecteurs. Ceci permet d'annuler les erreurs systématiques et les dérives lentes des détecteurs au moment du calcul de la différence de concentration.

Lorsque la différence des mesures de concentration en traceur des deux échantillons, est supérieure aux incertitudes de mesure normales des deux détecteurs, compte-tenu de l'annulation des erreurs systématiques et de la correction de pression absolue, l'unité 19 indique la présence d'une fuite et déclenche une alarme "fuite" 40.

La mesure de cette différence de concentration permet le calcul du débit de fuite grâce à la connaissance préalable du débit de balayage traversant la chambre 7. Ce débit de balayage peut être estimé par l'utilisation de l'une des techniques proposées selon l'invention et décrites par la suite.

La présence de deux détecteurs identiques mesurant la même concentration permet de comparer leurs indications donc de détecter une différence de mesure trop élevée. Une telle différence anormale est indicatrice d'une défaillance d'au moins un des détecteurs. Dans ce cas une alarme "système" 41 est générée par l'unité de traitement et de pilotage 19 pour déclencher une opération d'entretien ou de remplacement des détecteurs.

La surveillance est conçue de telle façon à minimiser le taux de fausses alarmes "fuites". L'unité 19 surveille régulièrement les diverses fonctions de la chaîne de mesure et déclenche l'alarme "système" 41 dans les cas non limitatifs suivants :
- trop faibles débits d'air dans les collecteur et tuyauterie 14 et 16, mesurés par les débitmètres 33 et 34,
- trop faible débit d'air dans les hygromètres 28, 29, mesuré par le débitmètre 31,
- température trop basse ou trop élevée de l'échantillon d'air analysé par les détecteurs d'humidité 28, 29, et mesurée par le capteur 35,
- écart entre la température de l'armoire 37, mesurée par le capteur de température 36, et la température de rosée mesurée par l'un des détecteurs d'humidité 28 ou 29, inférieur à un certain seuil.

Lorsque la température de rosée, mesurée par les détecteurs d'humidité 28 et 29, et la température de l'armoire 37, mesurée par le capteur de température 36, sont très proches, l'unité 19 déclenche une alarme particulière 42 indiquant la "saturation" de la mesure.

Les dégradations des détecteurs d'humidité 28, 29 sont diminuées par la présence du filtre 27 qui limite fortement la souillure de ces détecteurs. Les détecteurs d'humidité 28 et 29 sont, par exemple, des hygromètres à miroir refroidi, au chlorure de lithium ou capacitifs.

Les moyens de mesure opèrent avantageusement par hygrométrie à miroir refroidi. On peut utiliser particulièrement des hygromètres possédant un cycle de nettoyage virtuel du miroir de façon à en limiter l'entretien. Ces hygromètres à miroir fournissent une indication précise sur la température de rosée de l'air échantillonné.

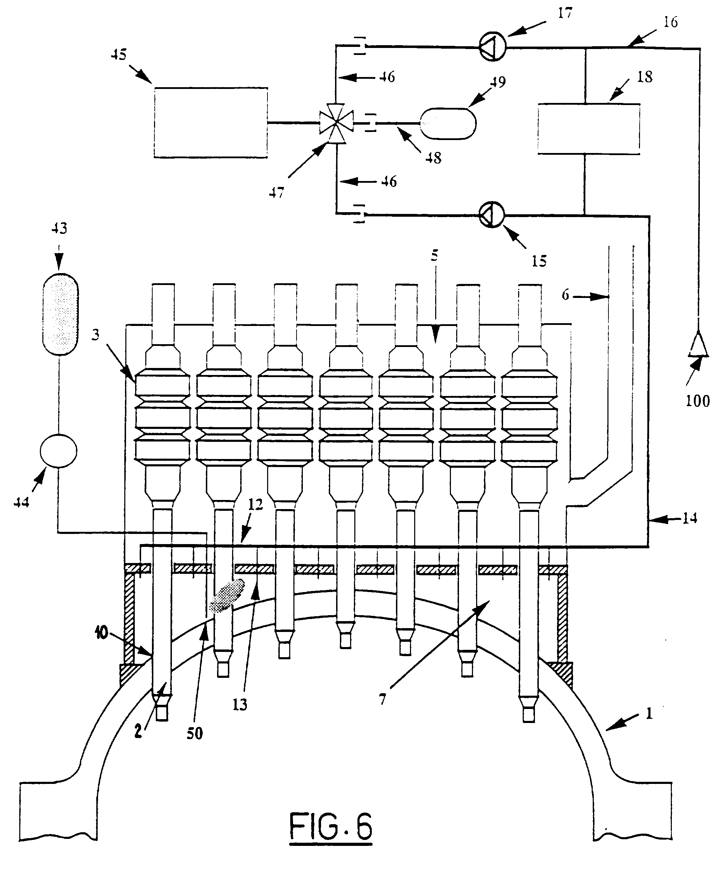

La Figure 6 illustre schématiquement un simulateur de fuite permettant l'évaluation du débit d'air traversant la chambre 7. Cette évaluation peut se faire lors de l'arrêt à chaud, précédant le redémarrage du réacteur, afin de bénéficier des conditions les plus proches possibles de celles du fonctionnement des dispositifs de prélèvement et de détection de fuite.

Ce dispositif simulateur utilise un gaz traceur, tel que l'hélium, dont la détection s'effectue avantageusement par spectrométrie de masse. Ce gaz, inerte et non toxique, peut être employé aisément. L'utilisation d'un spectromètre de masse pour la détection autorise une grande dynamique de mesure.

La difficulté essentielle rencontrée dans l'emploi de ce gaz réside dans la représentativité de la fuite de vapeur à simuler. Cette difficulté est surmontée par l'utilisation d'un mélange gazeux traceur tel que sa masse volumique soit la plus proche possible de celle de la vapeur d'eau issue d'une fuite. On peut utiliser, par exemple, un mélange air (53%)- hélium (47%) ou encore un mélange néon (82%)-hélium (18%). D'autre part, le débit de mélange gazeux utilisé est identique à celui de la fuite minimale que le dispositif décrit auparavant vise à détecter, soit 1 kg/h. Enfin, l'injection est réalisée le plus près possible des interfaces ou jonctions 10 couvercle-traversées 1-2, lieu d'apparition des fuites.

La technique utilisée est la suivante.

On injecte dans la chambre 7 un débit continu d'un mélange gazeux traceur contenu dans une bouteille 43 au travers d'un régulateur de débit massique 44 permettant le contrôle de ce débit. Le mélange gazeux traceur est acheminé dans la chambre 7 au travers d'un injecteur plongeant 50, débouchant près d'une interface 10 couvercle-traversée. L'hélium se mélange à l'air de balayage traversant la chambre 7. Le circuit de prélèvement, tel que décrit à propos des Figures 1, 2 ou 3, permet l'acheminement du gaz vers un spectromètre de masse 45. Ce spectromètre de masse permet de mesurer la teneur en hélium du gaz acheminé par le circuit de prélèvement, à la sortie des pompes 15 et 17. Une vanne 47 multi-voies permet d'effectuer une mesure soit sur l'air échantillonné dans la chambre 7, soit sur l'air échantillonné à l'extérieur 100 de la chambre 7 et servant de référence. Le calcul du rapport des concentrations en hélium mesurées dans les deux collecteur et tuyauterie 14 et 16 permet de calculer la dilution du traceur et d'en déduire le débit de balayage local d'air dans la chambre 7.

La plus grande quantité de l'hélium injecté dans la chambre 7 est reprise par la ventilation des mécanismes de commande 3 des grappes au travers des gaines d'aspiration telles que 6. Après passage sur des batteries froides, non illustrées, l'air et l'hélium qui y est contenu recirculent dans le bâtiment du réacteur 100. L'hélium s'accumule donc en partie dans le bâtiment réacteur du fait de la ventilation en circuit fermé des mécanismes de commande 3. On tient compte de cette accumulation d'hélium dans le bâtiment du réacteur en procédant, de façon originale, à une mesure supplémentaire qui permet un recalage des signaux délivrés par le spectromètre de masse 45. Pour ce faire, on utilise une réserve de gaz 49 contenant de l'hélium en teneur parfaitement connue et connectée, par une conduite 48, à la vanne multi-voies 47 elle-même raccordée au spectromètre de masse 45. Cette réserve de gaz 49 peut être, de façon simple, de l'air atmosphérique contenant naturellement 5,2 volumes par million d'hélium. Les mesures successives de la teneur en hélium dans les collecteur, tuyauterie et conduite 14, 16 et 48, permettent une meilleure évaluation du débit local d'air de balayage dans la chambre 7.

Différents débits locaux de balayage peuvent être calculés à partir d'autant de points d'injection dans la chambre 7. Le débit de balayage maximal mesuré localement, est alors retenu pour vérifier que l'ensemble de mesure 18, compte-tenu de ses performances intrinsèques, peut assurer la détection d'une fuite de vapeur d'eau primaire de 1 kg/h.

Cette technique peut être appliquée après chaque remontage du calorifugeage et des éléments constitutifs du circuit de prélèvement, afin de s'assurer du bon fonctionnement de celui-ci. Son usage peut se limiter à l'injection du mélange traceur en un seul point : celui où l'on aura mesuré lors d'essais précédents, un débit maximal de balayage local.

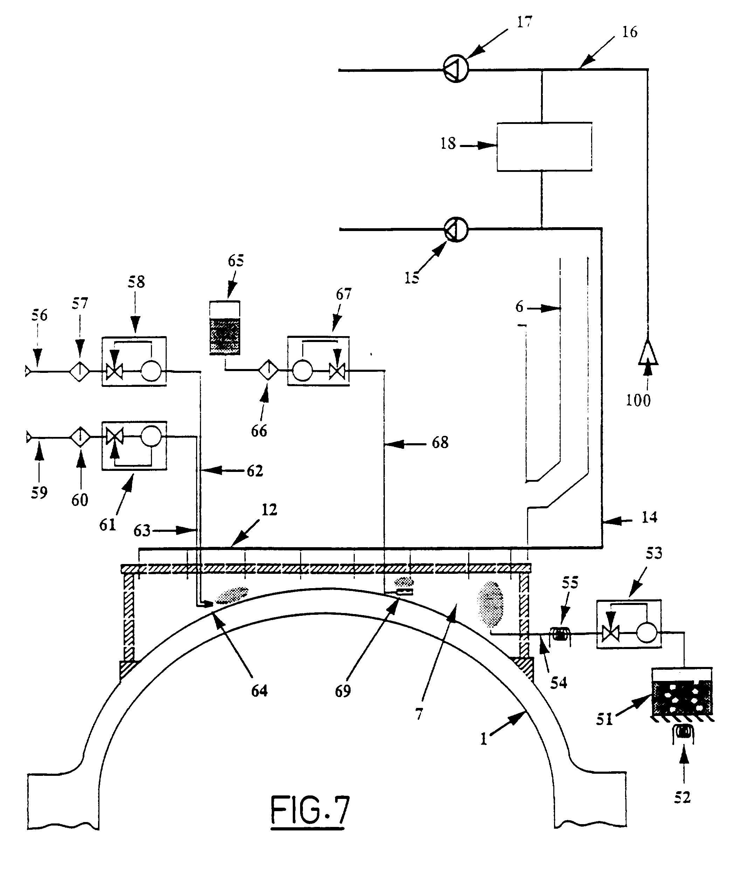

La Figure 7 illustre partiellement et schématiquement le simulateur d'une fuite de vapeur d'eau dans la chambre 7, au plus près des interfaces ou jonctions 10 couvercle-traversées 1-2.

L'injection de vapeur d'eau dans la chambre où débouchent les éventuelles fuites est particulièrement intéressante dans le cas où le dispositif de détection de fuites utilisé est basé sur la détection d'humidité selon l'invention. Cette injection d'un débit connu de vapeur d'eau permet de s'assurer simultanément du bon fonctionnement du dispositif de détection, de sa sensibilité suffisante et du fonctionnement correct du système de prélèvement.

Une première entité est composée d'une enceinte 51 contenant de l'eau portée à ébullition grâce à un élément chauffant 52. La vapeur ainsi produite, dont le débit est régulé par un régulateur de débit 53, est acheminée dans la chambre 7 par une conduite 54 après passage dans un surchauffeur 55 afin d'éviter toute condensation d'eau avant son entrée dans la chambre 7.

Une deuxième et une troisième entités servent à introduire de l'eau dans la chambre 7 et à profiter de la température élevée qui y règne pour transformer cette eau en vapeur.

La deuxième entité est un ensemble atomiseur pneumatique constitué, d'une part, d'une alimentation en eau 56 traversant un filtre 57 et un régulateur de pression 58 et, d'autre part, d'une alimentation en air comprimé 59 traversant un autre filtre 60 et un régulateur de pression 61. Deux canalisations d'eau 62 et d'air 63 pénètrent dans la chambre 7 où elles alimentent une buse 64, dont on connaît les caractéristiques. Cette buse permet l'atomisation de l'eau avec un débit connu, à proximité d'une interface ou jonction 10 couvercle-traversée 1-2. La température suffisamment élevée régnant dans la chambre 7 assure la transformation des gouttelettes d'eau en vapeur.

La troisième entité consiste en un réservoir 65 contenant de l'eau qui traverse un filtre 66 et un régulateur de débit 67. Cette eau est acheminée par une canalisation 68 à l'intérieur de la chambre 7 dans une cartouche 69. Cette cartouche 69 est principalement constituée d'un matériau résistant à la chaleur et perméable à l'eau tel qu'un métal fritté, de la fibre de verre ou de la laine d'acier de grande densité. La température suffisamment élevée régnant dans la chambre 7 assure la transformation en vapeur de l'eau affleurant à la surface de la cartouche.

Le procédé est mis en oeuvre de la façon suivante à l'aide du dispositif décrit auparavant.

Pour détecter des fuites on procède comme exposé par la suite.

La ventilation des mécanismes 3 de grappe étant en fonctionnement, un débit d'air de balayage traversant le volume de la chambre 7 s'établit.

Un prélèvement de l'air du volume de la chambre 7 est fait de façon continue grâce à la pompe 15 installée sur le collecteur 14 d'adduction.

Un autre prélèvement d'air 100, extérieur au volume de la chambre 7, est réalisé de façon continue grâce à la pompe 17 montée sur la tuyauterie 16 d'adduction.

Ces deux prélèvements sont effectués sous un faible débit (environ 3 m³/h chacun).

Un échantillonnage d'environ 100 l/h assuré par la pompe 32, permet l'admission d'air à analyser dans les détecteurs d'humidité ou hygromètres 28 et 29. Cet air provient alternativement des collecteur et tuyauterie 14 et 16. Le basculement de l'échantillonnage est assuré de façon périodique par l'électrovanne 26. La périodicité de ce basculement est d'environ 20 min par exemple.

Dans un premier temps, on attend la stabilisation des signaux délivrés par les hygromètres 28, 29. Aucune alarme "fuite" 40 ne peut être générée pendant cette durée.

Dans un second temps, on enregistre périodiquement les signaux délivrés par chacun des hygromètres 28, 29. On calcule ensuite les moyennes des mesures effectuées. Ces valeurs sont affichées par le calculateur 39.

A l'issue de ce calcul, l'unité 19 effectue d'abord un diagnostic du système de détection. Une alarme "défaut système" 41 est générée en cas de dépassement des seuils de bon fonctionnement des équipements ou de disparité trop importante des signaux délivrés par les hygromètres. Puis le calculateur 39 compare la moyenne des mesures acquises dans l'une des lignes de prélèvement, avec la moyenne des mesures acquises dans l'autre ligne de prélèvement.

Si la différence des moyennes de mesure réalisées dépasse un certain seuil, une alarme "fuite" 40 est générée par l'unité 19.

La présence naturelle de vapeur d'eau dans le volume de la chambre 7 donne une indication stable et n'empêche pas une sensibilité élevée de mesure. Il est possible de déceler des variations de température de rosée entre les deux lignes de prélèvement de l'ordre de 0,4°C et des fuites de vapeur d'eau dans la chambre 7 de l'ordre de 1 kg/h dans des conditions défavorables (fort débit de balayage dans le volume de la chambre 7 et température de rosée ambiante élevée).

La présence d'une fuite se caractérise toujours par une augmentation statistiquement stable de la teneur en vapeur d'eau mesurée dans le prélèvement fait dans la chambre 7, par rapport à la teneur en vapeur d'eau mesurée à l'extérieur de cette chambre.

Pour évaluer des fuites détectées on procède comme exposé par la suite.

L'indication du débit d'air de balayage traversant le volume de la chambre 7 et repris intégralement par la manchette 22, associée aux mesures délivrées par les hygromètres 28 et 29 affichées par le calculateur 39, permet à l'exploitant de l'installation nucléaire de calculer et de suivre périodiquement l'évolution de la fuite éventuellement détectée.

Dans le cas où des prélèvements sont faits comme illustré sur les Figures 1, 2 ou 3, l'utilisation, à chaque redémarrage de l'installation, d'une technique de simulation de fuite, utilisant soit un mélange gazeux traceur comportant de l'hélium soit de la vapeur d'eau, permet d'évaluer un débit de balayage local maximal traversant le volume de la chambre 7. Cette évaluation et les indications fournies par les hygromètres permettent à l'exploitant de l'installation nucléaire d'estimer une valeur maximale du débit de la fuite détectée.

Pour vérifier le bon fonctionnement des dispositifs de prélèvement et de détection des fuites on procède, de préférence périodiquement comme exposé par la suite.

Quel que soit le dispositif de prélèvement utilisé, on peut employer à chaque redémarrage d'un réacteur l'une des techniques de simulation de fuite proposées. On injecte dans le volume de la chambre 7 soit un mélange gazeux traceur contenant de l'hélium, soit de la vapeur d'eau avec un débit correspondant à celui de la fuite que l'on cherche à détecter. Dans le premier cas, la détection s'opère avec le spectromètre de masse 45 et on ne vérifie que le bon fonctionnement du système de prélèvement. Dans le second cas, la détection s'opère avec les détecteurs d'humidité 28 et 29 et on vérifie simultanément le bon fonctionnement du système de prélèvement utilisé et de l'ensemble de mesure 18 par le déclenchement de l'alarme 40 correspondant à l'apparition d'une fuite.

Les techniques de programmation d'un calculateur sont bien connues et ne font pas partie de l'invention.

De ce qui précède, on comprend l'intérêt de l'invention et on saisit les avantages qu'elle apporte notamment en matière de sécurité en permettant très tôt de modifier le régime de fonctionnement de l'installation nucléaire afin de le faire passer sur une solution de repli prévue.

## Revendications

1. Dispositif de détection de,fuites de traversées (2) du couvercle (1) de cuve de réacteur nucléaire, caractérisé en ce qu'il comprend un circuit de prélèvement de l'air circulant dans le volume d'une chambre (7) où débouchent les fuites (10) éventuelles avant que cet air soit dilué dans un circuit de refroidissement (4, 5, 6) des mécanismes de commande (3) des grappes de contrôle du réacteur.

2. Dispositif suivant la revendication 1, caractérisé en ce que le circuit de prélèvement comporte des rampes (12) qui sont munies de tubes (3) d'aspiration traversant le calorifugeage (8, 9) du couvercle (1) de cuve et qui sont fixées aux bandes (20) de calorifugeage et reliées entre elles (12) à l'aide d'un collecteur (14) commun.

3. Dispositif suivant la revendication 2, caractérisé en ce que le circuit de prélèvement comprend plusieurs rampes (12) fixées aux bandes (20) de calorifugeage et munies de tubes (13) d'aspiration multiples disposées pratiquement en carré autour de chaque traversée (2) de manière à permettre une surveillance individuelle de chacune des traversées (2).

4. Dispositif suivant la revendication 1, caractérisé en ce que le circuit de prélèvement comprend au moins une manchette (22) reliant le volume de la chambre (7) au circuit de refroidissement (4, 5, 6) des mécanismes de commande (3) de grappes, de manière à aspirer la totalité de l'air circulant dans le volume (7) où débouchent les fuites (10) éventuelles.

5. Dispositif suivant l'une des revendications 1 et 4, caractérisé en ce que le circuit de prélèvement comprend un collecteur (14) d'aspiration, ou plusieurs rampes (12) de prélèvement reliées entre elles, plongeant dans une ou plusieurs manchettes (22) reliant le volume de la chambre (7), où débouchent les fuites (10) éventuelles au circuit de refroidissement (4, 5, 6) des mécanismes de commande (3) des grappes.

6. Dispositif suivant l'une des revendications 1 et 4, caractérisé en ce que la ou les manchettes (22) sont pourvues d'un registre (23) permettant d'ajuster la pression différentielle entre le volume de la chambre (7) confinant des interfaces (10) couvercle (1)-traversées (2) et le volume de l'enveloppe (4) contenant les mécanismes de commande (3) de grappes, à l'aide d'un capteur de pression différentielle (24).

7. Dispositif suivant l'une quelconque des revendications 1 à 4, caractérisé en ce qu'il comprend un ensemble de mesure (18) d'une différence de concentration de vapeur d'eau libérée par une fuite (10), différence mesurée entre l'air prélevé dans le volume de la chambre (7) délimité par le calorifugeage (8, 9) du couvercle et le couvercle (1) de cuve lui-même, et l'air ambiant du bâtiment du réacteur (100).

8. Dispositif suivant l'une des revendications 1 et 7, caractérisé en ce que l'ensemble de mesure (18) assure une mesure de la différence de concentration de la vapeur d'eau dans deux échantillons d'air provenant l'un du volume de la chambre (7) et l'autre du bâtiment du réacteur (100) en faisant passer alternativement les deux échantillons dans deux hygromètres à miroir refroidi (28 et 29) identiques branchés en parallèle.

9. Dispositif suivant l'une des revendications 1, 7 et 8, caractérisé en ce que l'ensemble de mesure (18) comprend un filtre (27) éliminant poussières et vapeurs autres que la vapeur d'eau, permettant d'éviter la salissure des deux hygromètres (28 et 29) et réduisant les interventions de maintenance sur ceux-ci.

10. Dispositif suivant l'une des revendications 1, 7, 8 et 9, caractérisé en ce qu'il comporte un capteur de pression absolue (30) permettant la correction de pression partielle de vapeur d'eau dans le cas où des différences de pression existeraient entre le collecteur de prélèvement (14) et la tuyauterie (16) de référence reliée au bâtiment du réacteur (100).

11. Dispositif suivant les revendications 1, 7, 8, 9 et 10, caractérisé en ce que l'ensemble de mesure (18) est connecté à une entité de traitement et de pilotage (19) apte à générer une alarme (40) représentative d'une fuite (10) dès que la différence de concentration en vapeur d'eau mesurée entre l'air prélevé dans la chambre (7) et l'air ambiant du bâtiment du réacteur (100) est supérieure aux incertitudes de mesure.

12. Dispositif suivant l'une des revendications 1, 7, 8, 9, 10 et 11, caractérisé en ce que l'ensemble de mesure (18) est connecté à une entité de traitement et de pilotage (19) apte à générer une alarme (41) lorsque la différence des mesures devient anormalement élevée, alarme indicatrice qu'une opération de maintenance ou d'entretien des détecteurs est nécessaire.

13. Dispositif suivant les revendications 1, 7, 8, 9 et 10, caractérisé en ce que l'ensemble de mesure (18) est installé dans une armoire (37) étanche thermostatée elle-même munie de moyens démontables pour son raccordement avec le circuit de prélèvement.

14. Procédé de test simultané de bon fonctionnement du dispositif suivant l'une des revendications 1, 2, 3, 4, 7, 8 et 11, caractérisé en ce qu'on simule la présence d'une fuite par l'injection de vapeur d'eau (56, 57, 58, 59, 60, 61, 62, 63 à proximité (64) des endroits où les fuites (10) risquent de se produire.

## Patentansprüche

1. Vorrichtung zum Aufspüren von Lecks an den Durchführungen (2) des Deckels (1) eines Kernreaktorkessels, dadurch gekennzeichnet, daß sie einen Probenahmekreislauf umfaßt zur Entnahme der im Volumen einer Kammer (7), in welche die eventuellen Leckströme (10) austreten, zirkulierenden Luft, bevor diese in einem Kühlkreislauf (4, 5, 6) zur Abkühlung der Antriebe (3) der Regelelemente des Reaktors verdünnt wird.

2. Vorrichtung nach Anspruch 1, dadurch gekennzeichnet, daß der Probenahmekreislauf Bühnen (12) umfaßt, die mit durch die Wärmedämmung (8, 9) des Reaktorkesseldeckels (1) hindurchführenden Ansaugrohren (3) ausgerüstet sind, wobei diese Bühnen an den Wärmedämmplatten (20) befestigt und über eine gemeinsame Sammelleitung (14) miteinander verbunden (12) sind.

3. Vorrichtung nach Anspruch 2, dadurch gekennzeichnet, daß der Probenahmekreislauf mehrere an den Wärmedämmplatten (20) befestigte Bühnen (12) umfaßt, die mit zahlreichen, praktisch im Viereck um jede Deckeldurchführung (2) in der Weise angeordneten Ansaugrohren (13) ausgerüstet sind, daß jede der Deckeldurchführungen (2) individuell überwacht werden kann.

4. Vorrichtung nach Anspruch 1, dadurch gekennzeichnet, daß der Probenahmekreislauf mindestens eine Manschette (22) umfaßt, durch die das Volumen der Kammer (7) in der Weise mit dem Kühlkreislauf (4, 5, 6) zur Kühlung der Antriebe (3) der Regelelemente verbunden ist, daß die gesamte im Volumen der Kammer (7), in welche die eventuellen Leckströme (10) austreten, zirkulierende Luft abgesaugt wird.

5. Vorrichtung nach einem der Ansprüche 1 und 4, dadurch gekennzeichnet, daß der Probenahmekreislauf eine Ansaug-Sammelleitung (14), oder mehrere untereinander verbundene Probenahme-Bühnen (12) aufweist, wobei diese Leitung in eine oder mehrere Manschetten (22) mündet, die das Volumen der Kammer (7), in welche die eventuellen Leckströme (10) austreten, mit dem Kühlkreislauf (4, 5, 6) zur Kühlung der Antriebe (3) der Regelelemente verbindet bzw. verbinden.

6. Vorrichtung nach einem der Ansprüche 1 und 4, dadurch gekennzeichnet, daß die Manschette oder die Manschetten (22) einen Schieber (23) aufweisen, mit dem der Differentialdruck zwischen dem Volumen der die Schnittstellen (10) Deckel (1)-Deckeldurchführungen (2) umschließenden Kammer (7) und dem Volumen des die Antriebe (3) der Regelelemente enthaltenden Mantels (4) mit Hilfe eines Differentialdruckfühlers (24) geregelt werden kann.

7. Vorrichtung nach einem der Ansprüche 1 bis 4, dadurch gekennzeichnet, daß sie eine Meßeinrichtung (18) zur Messung einer Differenz der Konzentration des durch ein Leck (10) freigewordenen Wasserdampfes aufweist, wobei diese Differenz zwischen der im Volumen der durch die Wärmedämmung (8, 9) des Deckels und den Kesseldeckel (1) selbst begrenzten Kammer (7) entnommenen Luft und der Umgebungsluft im Reaktorgebäude (100) gemessen wird.

8. Vorrichtung nach einem der Ansprüche 1 und 7, dadurch gekennzeichnet, daß die Meßeinrichtung (18) eine Messung der Konzentration des in zwei Luftproben enthaltenen Wasserdampfes gewährleistet, wobei die eine der Proben aus dem Volumen der Kammer (7) stammt und die andere aus dem Reaktorgebäude (100), und wobei diese beiden Proben abwechselnd in zwei parallel geschaltete identische Kaltspiegelhygrometer (28 und 29) geleitet werden.

9. Vorrichtungn nach einem der Ansprüche 1, 7 und 8, dadurch gekennzeichnet, daß die Meßeinrichtung (18) einen Filter (27) aufweist, der Staub und andere Dämpfe als den Wasserdampf auffängt und so die Verschmutzung der beiden Hygrometer (28 und 29) zu verhindern und die Wartungsarbeiten daran zu reduzieren ermöglicht.

10. Vorrichtung nach einem der Ansprüche 1, 7, 8 und 9, dadurch gekennzeichnet, daß sie einen Absolutdruck-Meßwertgeber (30) aufweist, mit dem der Wasserdampf-Teildruck für den Fall korrigiert werden kann, daß Druckunterschiede zwischen der Probenahme-Sammelleitung (14) und der mit dem Reaktorgebäude (100) verbundenen Referenz-Rohrleitung (16) bestehen sollten.

11. Vorrichtung nach einem der Ansprüche 1, 7, 8, 9 und 10, dadurch gekennzeichnet, daß die Meßeinrichtung (18) an eine Datenverarbeitungs- und Steuereinheit (19) angeschlossen ist, welche in der Lage ist, einen ein Leck (10) anzeigenden Alarm (40) zu erarbeiten und auszulösen, sobald die zwischen der in Kammer (7) entnommenen Luft und der Umgebungsluft im Reaktorgebäude (100) gemessene Wasserdampf-Konzentrationsdifferenz die Messungsschwankungen übersteigt.

12. Vorrichtung nach einem der Ansprüche 1, 7, 8, 9, 10 und 11, dadurch gekennzeichnet, daß die Meßeinrichtung (18) an eine Datenverarbeitungs- und Steuereinheit (19) angeschlossen ist, welche in der Lage ist, einen Alarm zu erarbeiten und auszulösen, wenn die Differenz der Messungen einen anormal hohen Wert erreicht, zwecks Anzeige der Notwendigkeit eines Wartungsvorgangs oder der Instandsetzung der Meßfühler.

13. Vorrichtung nach den Ansprüchen 1, 7, 8, 9 und 10, dadurch gekennzeichnet, daß die Meßeinrichtung (18) in einem abgedichteten, mit Thermostaten ausgerüsteten Schaltschrank (37) installiert ist, der Steckanschlüsse zur Verbindung mit dem Probenahmekreis aufweist.

14. Verfahren zur gleichzeitigen Durchführung einer Überprüfung des einwandfreien Betriebs der Vorrichtung nach einem der Ansprüche 1, 2, 3, 4, 7, 8 und 11, dadurch gekennzeichnet, daß das Vorhandensein eines Lecks durch Injizieren von Wasserdampf (56, 57, 58, 59, 60, 61, 62, 63) in der Nähe der Stellen (64) simuliert wird, an denen die Lecks (10) auftreten könnten.

## Claims

1. Device for the detection of leaks from openings (2) in the cover (1) of the tank of a nuclear reactor, characterised in that it comprises a discharge circuit for the air circulating in the interior of a chamber (7) where any leaks (10) discharge before this air is diluted in a cooling circuit (4, 5, 6) for operating mechanisms (3) of the controls of the reactor.

2. Device according to Claim 1, characterised in that the discharge circuit comprises ramps (12) which are fitted with intake pipes (13) passing through the thermal insulation (8, 9) of the cover (1) of the tank and which are attached to thermal insulation strips (20) and interconnected (12) by means of a common collector (14).

3. Device according to Claim 2, characterised in that the discharge circuit comprises several ramps (12) attached to the thermal insulation strips (20) and fitted with multiple intake pipes (13) disposed virtually in a square around each opening (2) so as to permit individual observation of each of the openings (2).

4. Device according to Claim 1, characterised in that the discharge circuit comprises at least one fitting (22) connecting the interior of the changer (7) to the cooling circuit (4, 5, 6) for the operating mechanisms (3) of the controls so as to draw in all the air circulating in the interior (7) where any leaks (10) may discharge.

5. Device according to one of Claims 1 and 4, characterised in that the discharge circuit comprises an intake collector (14) or several interconnected discharge ramps (12) sloping into one or several fittings (22) connecting the interior of the chamber (7) where any leaks (10) discharge into the cooling circuit (4, 5, 6) of the operating mechanisms (3) of the controls.

6. Device according to one of Claims 1 and 4, characterised in that the fitting or fittings (22) are provided with a recording means (23) to allow the differential pressure to be adjusted between the interior of the chamber (7) enclosing the joining areas (10) of the cover (1) and openings (2) and the interior of the enclosure (4) containing the operating mechanisms (3) of the controls by means of a differential pressure sensor (24).

7. Device according to any one of Claims 1 to 4, characterised in that it comprises an assembly (18) for measuring a difference in the concentration of steam released by a leak (10), said difference measured between the air discharged into the interior of the chamber (7), defined by the thermal insulation (8, 9) of the cover and the cover (1) of the tank itself, and the ambient air of the structure of the reactor (100).

8. Device according to one of Claims 1 and 7, characterised in that the measurement assembly (18) effects measurement of the difference in the concentration of steam in two samples of air, one taken from the interior of the chamber (7) and the other from the structure of the reactor (100), said two samples being passed alternately into two identical parallel-branch cooled-surface hygrometers (28 and 29).

9. Device according to one of Claims 1, 7 and 8, characterised in that the measurement assembly (18) comprises a filter (27) for removing dust and vapours other than steam in order to prevent soiling of the two hygrometers (28 and 29) and reduce maintenance operations of these.

10. Device according to one of Claims 1, 7, 8 and 9, characterised in that it comprises an absolute pressure sensor (30) to allow correction of the partial pressure of steam should pressure differences exist between the discharge collector (14) and the reference pipe system (16) connected to the structure of the reactor (100).

11. Device according to Claims 1, 7, 8, 9 and 10, characterised in that the measurement assembly (18) is connected to a processing and monitoring unit (19) able to generate an alarm (40) indicating a leak (10) as soon as the difference in the concentration of steam measured between the air discharged in the chamber (7) and the ambient air in the structure of the reactor (100) is greater than measurement uncertainties.

12. Device according to one of Claims 1, 7, 8, 9, 10 and 11, characterised in that the measurement assembly (18) is connected to a processing and monitoring unit (19) able to generate an alarm (41) when the differences in measurements become abnormally high, said alarm being to indicate that a maintenance operation or repair of the detectors is necessary.

13. Device according to Claims 1, 7, 8, 9 and 10, characterised in that the measurement assembly (18) is installed in a sealed cabinet (37) which is thermostatically controlled and is itself equipped with detachable means for its connection to the discharge circuit.

14. Process for simultaneously testing the proper function of the device according to one of Claims 1, 2, 3, 4, 7, 8 and 11, characterised in that it simulates the presence of a leak by injecting steam (56, 57, 58, 59, 60, 61, 62, 63) close to (64) the locations where there is the risk of leaks (10) occurring.
